(19) Europäisches Patentamt
European Patent Office
Office européen des brevets

(11) Publication number: **0 146 965**
**B1**

(12) **EUROPEAN PATENT SPECIFICATION**

(45) Date of publication of patent specification: **05.12.90**

(51) Int. Cl.$^5$: **C 08 L 57/00**

(21) Application number: **84116336.3**

(22) Date of filing: **27.12.84**

(54) **Polymer blends containing a polymer having pendant oxazoline groups.**

(30) Priority: **27.12.83 US 565790**

(43) Date of publication of application:
**03.07.85 Bulletin 85/27**

(45) Publication of the grant of the patent:
**05.12.90 Bulletin 90/49**

(84) Designated Contracting States:
**IT**

(56) References cited:
**GB-A-1 194 195**
**US-A-2 897 192**
**US-A-3 488 307**
**US-A-4 474 923**

(73) Proprietor: **THE DOW CHEMICAL COMPANY**
**2030 Dow Center Abbott Road P.O. Box 1967**
**Midland Michigan 48640-1967 (US)**

(72) Inventor: **Schuetz, James Edwin**
**1512 Crane Court**
**Midland, MI 48640 (US)**
Inventor: **Meridith, Brenda Christine**
**2101 Eastlawn Drive**
**Midland Michigan 48640 (US)**
Inventor: **Hohlfeld, Ronald William**
**2320 Old Pine Trail**
**Midland Michigan 48640 (US)**

(74) Representative: **Huber, Bernhard, Dipl.-Chem. et al**
**Patentanwälte H. Weickmann, Dr. K. Fincke F.A. Weickmann, B. Huber Dr. H. Liska, Dr. J. Prechtel**
**Möhlstrasse 22 Postfach 860 820**
**D-8000 München 86 (DE)**

**EP 0 146 965 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a compatible blend of two or more normally incompatible polymers. More particularly, this invention relates to blends of a first polymer containing pendant cyclic iminoether groups and another polymer containing groups which react with cyclic iminoether groups to form linkages between the polymers.

It is often desirable to prepare blends of two or more polymers in order to prepare a blended material which maximizes the desirable properties but minimizes the deficiencies of the component polymers. For example, monovinylidene aromatic polymers, such as polystyrene, have desirable properties such as being easily thermoformed and have good mechanical characteristics. However, such monovinylidene aromatic polymers have certain undesirable properties such as poor environmental stress crack resistance (ESCR). On the other hand, polyolefins such as polyethylene or polypropylene have relatively good ESCR and low temperature properties but are not as readily thermoformed as desired. It would be highly desirable to provide a blend of a monovinylidene aromatic polymer and a polyolefin which exhibits the desirable properties but not the deficiencies of the component polymers. Similarly, it is often desirable to blend other polymers in like manner.

It is normally expected that polymer blends will have properties which are approximately the average of those of the component blends. In other words, it is expected that such blends will exhibit mechanical properties, ESCR, moldability, thermoformability, and like properties which are intermediate to those of the component polymers.

Unfortunately, however, such blends often do not exhibit these expected properties. Many such blends exhibit properties which are, in fact, far worse than those of the component polymers. For example, many blends exhibit impact strength or other mechanical properties which are inferior to those of any of the component polymers alone.

Often these properties are due to the incompatibility of the component polymers. Such incompatible polymers do not form a blend in which each component polymer is intimately dispersed within the other polymer. Instead, such blends tend to contain discrete domains of each of the component polymers. These domains are not intimately associated with the adjacent domains of the other polymer. The presence of these domains cause discontinuities in the structure of the other polymers and cause the blend to exhibit inferior properties.

Monovinylidene aromatic polymers such as polystyrene and rubber modified polystyrene are notably incompatible with many polymers which could otherwise be advantageously blended therewith. Thus, most blends containing polystyrene and like polymers exhibit poorer than expected properties. In particular, polystyrene and polyolefins are incompatible and blends thereof exhibit quite poor properties.

Various methods have been proposed to prepare blends of normally incompatible polymers. Generally, these methods have focused on the use of grafting techniques or the use of a third component, a compatibilizing agent, in the blend. For example, in U.S. Patent Nos. 4,386,187 and 4,386,188 it is taught to prepare blends of polyolefins and a polystyrene using a styrene/butadiene/styrene block copolymer. Compatibilizing agents which are ethylene/vinylacetate copolymers, ethylene/acrylic acid ester copolymers and ethylene/methacrylic acid ester copolymers have also been taught for use in preparing blends of polystyrene and polyolefins (see Japanese Patent Announcement Kokai No. 48—43031/1973). Other such compatibilizing agents are taught in, for example, U.S. Patent Nos. 4,188,432; 4,020,025; British Patent No. 1,363,463 and German Patent No. 241,375.

Unfortunately, these approaches to preparing compatible polymer blends often do not yield entirely satisfactory results. In many instances, the type and proportion of the component polymers which can be blended using these techniques is quite narrowly restricted. In addition, the inclusion of an additional component in the blend often has an adverse effect on the properties of the blend. Moreover, the blend achieved is still not as compatible as desired and accordingly the properties of the blend are sometimes not as good as expected.

GB—PS 1,194,195 describes heat-curable mixtures. These mixtures consist for the one part of a polymer containing oxazoline or oxazine rings and for the other part of polycarboxylic acids having at least two carboxylic acid groups. The components are used at such a ratio that there is sufficient copolymer to make possible the desired dense degree of crosslinking. Therefore a strong crosslinking takes place in order to achieve hard coatings. Also US—PS 3,488,307 describes thermosetting coatings consisting of various components. The components may contain for instance alcohol groups and oxazoline groups. By exposing to ultraviolet light a polymer crosslinks and becomes insoluble in solvents.

Accordingly, it would be desirable to provide a blend of normally incompatible polymers in which improved compatibilization of the polymers and improved properties of the blend are achieved.

This invention is such a compatible blend of normally incompatible polymers. This polymer blend comprising a component having units containing a pendant cyclic iminoether group, is characterized in that the blend is a thermoplastic polymer blend comprising a first reactive thermoplastic polymer containing a compatibilizing amount of repeating units containing a pendant cyclic iminoether group, and a second reactive thermoplastic polymer containing a compatibilizing amount of repeating units containing a co-reactive group which is capable of reacting with said cyclic iminoether group to form a linkage between said first and second relative polymers, wherein said first and second reactive polymers are normally

incompatible when said first and second polymers do not contain such cyclic iminoether and co-reactive groups.

The blend of this invention is a compatible (or miscible) blend of the component polymers. Accordingly such a blend exhibits the desirable properties of each of the component polymers with no significant decrease in properties due to incompatibility. A significant advantage of the blend is that the blend requires no additional plasticizers, surfactants, or other compatibilities. A further advantage to this blend is that the component polymers, although modified to contain cyclic iminoether or coreactive groups, exhibit generally the same properties as the corresponding polymer which contains no such functional groups. In many cases, said other polymer normally contains groups which are capable as functioning as the coreactive group in this invention and therefore do not require any modification to be suitable herein.

By varying the proportions of cyclic iminoether and coreactive groups employed in the component polymers, the rheology of the resultant blend can be changed as desired. In addition, the blends of this invention can be prepared using wide ranges of polymer components as well as a variety of types of polymer components.

The term "blend" as employed herein refers those solid mixtures of two or more polymers which are commonly referred to in the art as polymer blends or polymer alloys. The term "compatible blend" or "miscible blend" and like terms, as employed herein, are not employed in the strict sense as meaning that the blend exhibits a single glass transition temperature, but instead is used to describe a blend which exhibits properties, especially physical properties, which are essentially intermediate to those of the component polymers, or better. By contrast, an "incompatible blend" or "immiscible blend" as used herein, refers to a blend which exhibits properties which are significantly poorer than those of the component polymers.

The blends of this invention contain a first polymer which contains repeating units having pendant cyclic iminoether groups. Said cyclic iminoether group is present in a compatibilizing amount, i.e., an amount which is at least sufficient to render the first polymer compatible with the other polymer employed herein. Of course, the amount of cyclic iminoether group which is required to compatibilize the first and other polymer depends somewhat on the particular polymer employed, the relative amount thereof present in the blend and the amount of coreactive groups on the other polymer. However, in general, a compatibilizing amount of said cyclic iminoether group is present when the repeating units containing said cyclic iminoether group comprise at least 0.01 weight percent of the first polymer.

Since, as described more fully hereinafter, the cyclic iminoether group apparently forms a linkage with the coreactive group on said other polymer, it is readily seen that the degree of crosslinking and the molecular weight of the polymer of the blend can also be controlled with the proportion of cyclic iminoether and coreactive groups present in the blend. However, it is only essential herein that the amount of cyclic imino ether group in said first polymer (and coreactive group on said other polymer) be sufficient to compatibilize polymers in the blend. Most typically, the first polymer contains from 0.01 to 10 in weight percent of repeating units containing pendant cyclic iminoether groups. More preferably, the first polymer contains from 0.1 to 5 weight percent of such repeating units.

Such cyclic iminoether groups are advantageously described by the general structure

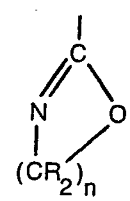

wherein each R is independently hydrogen, or an inertly substituted hydrocarbon containing 18 or fewer carbon atoms; and n is a number from 1 to 5. Said cyclic iminoether group can be attached to the polymer chains through any of the carbon atom in the ring. Preferably, the cyclic iminoether is a 2-iminoether, i.e., is attached to the polymer chain through the 2-carbon atom to yield a structure as represented as

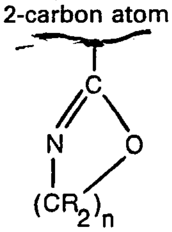

wherein R and n are as defined hereinbefore. Preferably, each R is hydrogen or lower alkyl and n is 1, 2 or 3. Most preferably, each R is hydrogen, n is 2 and the cyclic iminoether is a 2-oxazoline group. By "inertly substituted" it is meant that the referenced group contains no functional group which interferes with the polymerization or curing of the oxazoline group.

Polymers containing repeating units having pendant cyclic iminoether groups are advantageously prepared by the polymerization of a monomer mixture comprising an ethylenically unsaturated monomer

containing a cyclic iminoether group. Preferably, such monomer is a 2-alkenyl-2-oxazoline wherein said alkenyl group contains from 2 to 8, preferably 2 from 4 carbon atoms. Most preferably, said monomer is 2-isopropenyl-2-oxazoline.

The coreactive group may be pendant to said other polymer, may form terminal groups thereon or may be incorporated into the polymer backbone thereof. Polymers containing coreactive groups along the polymer backbone include, for example, polyamines, such as the diverse polyalkylene amines; and the like. Polymers containing terminal coreactive groups include, for example, diverse polysulfides (Thiokols), epoxy resins and polyalkylene glycols.

Preferably the coreactive group is an electrophilic group containing an active hydrogen. More preferably said electrophilic group containing an active hydrogen is a carboxylic acid, amino or hydroxyl group.

Most generally, said other polymer contains pendant coreactive groups which are derived from an addition polymerizable monomer containing the desired coreactive group. Preferred, are polymers having repeating units derived from α,β-ethylenically unsaturated monomers containing said coreactive groups. Examples of such polymers are polymers of unsaturated carboxylic acids such as acrylic acid, methacrylic acid, itaconic acid, maleic acid and the like; unsaturated amines such as vinylamine and the like. In addition, polymers of other monomers which can be chemically modified to form pendant coreactive groups in the polymers, such as acrylonitrile, are usually employed herein.

The other polymer contains at least a sufficient amount of said coreactive groups to compatibilize the first and other polymer. As stated hereinbefore, a compatibilizing amount of said coreactive group will depend on the particular polymers employed in the blend as well as the relative proportions of said polymers in the blend and the amount of the iminoether groups present on said first polymer. However, as with the iminoether group, a compatibilizing amount of the coreactive group is typically present when at least about 0.01 weight percent of the repeating units of the other polymer contain coreactive groups. When said coreactive group is an integral part of the structure of the polymer backbone, as many as 100 weight percent of such repeating units in the other polymer may contain coreactive groups. Typically, when said coreactive group is a pendant group incorporated into said other polymer for the primary purpose of compatibilizing the blends of this invention, it is preferred that the repeating units containing said coreactive groups comprise from 0.01 to 10, more preferably, from 0.1 to 5 weight percent of said other polymer.

Said first polymer is a polymer of any monomer which (a) can be modified to contain pendant cyclic iminoether groups, or (b) can be copolymerized with a monomer which contains or can be modified to contain pendant cyclic iminoether group. In the preferred embodiment, wherein an ethylenically unsaturated cyclic iminoether is employed as a monomer, the first polymer is advantageously a polymer of an addition polymerizable monomer copolymerizable monomer copolymerizable therewith.

Said first polymer is advantageously a polymer of a lower alkene, particularly a $C_2$—$C_8$ alkene, more particularly, ethylene or propylene as well as copolymers thereof; a conjugated diene such as butadiene or isoprene as well as copolymers thereof; a vinylidene halide such as vinylidene chloride or copolymers thereof; vinyl acetate; an ether of an α,β-ethylenically unsaturated carboxylic acid such as alkyl esters of acrylic or methyl acrylic acid and copolymers thereof; a monovinylidene aromatic compound such as styrene, vinyltoluene, t-butyl styrene, vinylnaphthalene and the like; as well as polymers of diverse other addition polymerizable monomers. Ethylenically unsaturated cyclic iminoethers, in particular 2-alkenyl-2-oxazolines, generally resemble styrene in their polymerization reactions. Accordingly, as a rule of thumb, polymers of monomers which are copolymerizable with styrene will generally be usefully employed herein. Due to the polymerization reactions of 2-alkenyl-2-oxazolines and the tendency for styrenic polymers to be incompatible with a wide range of other thermoplastic materials, it is preferred that the first polymer be a polymer of a 2-alkenyl-2-oxazoline and styrene, especially 2-isopropenyl-2-oxazoline and styrene.

As stated hereinbefore, said second polymer can be one of any thermoplastic polymer which contains or can be modified to contain a coreactive group as described hereinbefore. Addition polymers such as polymers of olefins, vinyl halides, vinylidene halides, acrylic esters, monovinylidene aromatics and the like as described hereinbefore in conjunction with a description of said first polymer are useful with said other polymer. In order to be useful herein said polymer is generally a copolymer of an addition polymerizable monomer which contains said coreactive group or which can be modified subsequent to polymerization to impart said coreactive group thereto. For example, in any of the aforementioned addition polymers can be copolymerized with an addition polymerizable carboxylic acid to impart carboxyl groups to the polymer. Amino groups, amide groups and like coreactive groups can be imparted to the other polymer in similar manner by copolymerizing a monomer mixture containing the desired proportion of an addition polymerizable monomer containing such group. Also, graft or block copolymers wherein at least one of the grafted segments or blocks contain a reactive group can be employed herein.

Polymers of certain monomers such as vinyl or vinylidene halide or acrylonitriles can be modified after the polymerization thereof to impart coreactive moieties thereto. For example, vinyl chloride can be reacted with ammonia or a primary amine to place pendant amine groups on the polymer. Similarly, acrylonitrile can be hydrogenated after its polymerization to form pendant amine groups.

Certain other polymers which normally contain coreactive groups may be employed herein. For

example, polymers containing repeating amine linkages, such poly(ethyleneimine) or a partially hydrolyzed poly-(2-alkyl-2-oxazoline) are suitable as the other polymer herein. Other suitable polymers include those which contain amine, carboxylic acid, hydroxyl, epoxy, mercaptan, anhydrate and like groups in the polymer chain or as end groups therein.

When such other polymer does not normally contain coreactive groups it is generally desirable to prepare said other polymer with relatively small amounts of said coreactive groups. This is because it is usually desirable to minimize the effect of the coreactive group or monomers containing said coreactive group on the physical properties of said other polymer. The presence of large amounts of certain reactive groups, such as acid groups, can cause the blend to have certain undesirable properties such as watersensitivity, adhesion to mold and corrosion of molds. It is usually desirable to employ as the other polymer a material having physical characteristics similar to those of the corresponding polymer which does not contain coreactive groups. For example, a copolymer of ethylene and acrylic acid can be employed as said other polymer herein. In order to make the properties of said ethylene/acrylic acid polymer resemble those of polyethylene as closely as possible, it is generally desirable to employ an ethylene acrylic acid copolymer having an acrylic acid content not greatly in excess of that required to compatibilize the blends.

The blends of this invention are advantageously prepared from the component polymers by conventional melt blending or solution blending techniques. Melt blending is advantageously performed by heating each polymer to a temperature about its softening point and thoroughly mixing the softened polymers. Solution blending is performed by dissolving each component polymer into a common solvent and precipitating the dissolved polymers therefrom. Melt blending is the preferred method of preparing the blends of this invention.

Although it is not intended to limit the invention to any theory, it is believed that the compatibility of the blends of this invention is due to the reaction of said coreactive and iminoether groups present therein. Said coreactive and iminoether groups are believed to react to form linkages between said first and other polymer, thereby overcoming the normal tendency of the polymers to resist the formation of a compatible blend.

Since crosslinkages between the polymers are present in the blends of this invention, it is apparent that presence of linking groups on each polymer can also be used as a control on the rheological and thermoplastic properties of the blends. Since the presence of such linking groups increase the molecular weight of the polymers in the blends, increasing the amounts of such linkages enables the practitioner to prepare more viscous, stronger materials by further increasing the amount of linkage in the blends.

Typically the formation of said linkages is achieved by the application of a moderate amount of heat to the blends. The amount of heat required is typically dependent on the particular coreactive group employed. In general, carboxylic acid groups are more reactive than amide, amine or hydroxyl groups and therefore require lower temperatures to form such crosslinkages. Usually, when a hot blending technique is employed to form the blends, the temperature at which the melt blending is performed is generally sufficient to cause the formation of linkages therein. Generally, and especially when the coreactive group is a carboxylic acid, such linkages are formed in one minute or less at the temperatures used to melt blend the polymers. It may be desirable to incorporate into the blend a catalyst which increases the rate of the reaction between the iminoether and coreactive group. Lewis acids such as zinc chloride or iron chloride are suitable as such catalysts. In addition, it may be desirable to include a plasticizer or lubricant in the blends in order to facilitate the iminoether and coreactive groups contacting each other in the blending process. However, the inclusion of either a catalyst, plasticizer or lubricant is optional herein. An important advantage of the present invention is that the formation of links in the blends of this invention is accomplished without the formation of any by-products and without the formation of ionic links. Unlike most curable systems, in which water, ammonia, or alcohol or other condensation product is formed in the curing reaction, the formation of links in this invention does not create such by-products. Accordingly, the links are formed in these blends without the undesirable formation of vaporous condensation products as impurities in the blends. The use of ionic crosslinks is also undesirable because such ionic crosslinks are often sensitive to pH, water and electrolytes and render the blends somewhat hydrophilic.

The blends of this invention may be employed in most applications for which the component polymers are suitable. Said blends may be employed to form shaped articles of all types as well as for films for packaging and like usages.

The following examples are provided to illustrate the invention but not to limit the scope thereof as claimed. All parts and percentages are by weight unless otherwise indicated.

Experiment 1

In a Brabender mixer heated to about 220°C were softened 25 grams (g) of an ethylene acrylic acid (EAA) copolymer (9 percent by weight repeating acrylic acid units). To the softened EAA polymer was added 25 g of a styrene/2-isopropenyl-2-oxazoline (SIPO) copolymer containing 1 percent by weight repeating isopropenyl oxazoline (IPO) units. Mixing is continued until a homogeneous appearing blend is obtained.

The heat distortion temperature, heat distortion temperature under load, tensile strength, tensile modulus, elongation of break, notch impact strength and melt flow of the resulting blend were determined

in conventional manner and are reported as Sample No. 1 in Table I following. For comparing corresponding values a commercially available polystyrene, an EAA copolymer used in preparing the blend and a commercially available high-impact polystyrene were obtained and reported in Table I following.

TABLE I

| Sample | Sample No. 1 | PS[1]* | EAA[2]* | HIPS[3] |
|---|---|---|---|---|
| Heat Distortion[4] (°C) Temperature (°F) | 88 (190) | 104.5 (220) | 77 (170) | 100 (212) |
| Heat Distortion Under[5] (°C) Load (18.2 bar) (°F) | 52 (126) | 99 (210) | — ND | 92 (197) |
| Tensile Strength (bar)[6] | 200 | 359 | 76 | 179 |
| Tensile Modulus (bar)[7] | 4137 | 28.959 | <690 | 15.858 |
| Elongation (%)[8] | 50 | 2 | >150 | 40 |
| Impact Strength (kg·m/2.54 cm)[9] | 1.38 | 0.028 | NB | 0.21 |
| Melt Flow (g/10 min.)[10] | 1.7 | 7 | ND | 3.0 |

* Not an example of the invention.
ND — Not Determined.
NB — Sample does not break, therefore no value is obtained.
[1]Polystyrene, $M_n$ = 200,000.
[2]Ethylene/Acrylic acid copolymer.
[3]High Impact Polystyrene.
[4]ASTM D1525
[5]ASTM D648
[6–8]ASTM D638
[9]ASTM D256
[10]ASTM D1238

It is readily seen from the data presented in Table I that a compatible blend of the SIPO and EAA polymer was achieved. Excellent tensile and heat distortion properties were obtained with the blend of this invention in contrast to non-compatible blends of styrenic and olefin polymers which exhibit notably poor tensile properties.

In order to monitor the formation of linkages between the SIPO and EAA polymers, torque measurements were made while mixing varying EAA and SIPO polymers in a Brabender as described hereinbefore. As a control, a torque measurement was made on a 50/50 blend of polystyrene and an EAA (3 percent acrylic acid) polymer. Upon adding the polystyrene to the softened EAA polymer, the torque exerted by the blend abruptly increased due to the presence of unsoftened polystyrene in the system. As the polystyrene softens and is blended with the EAA polymer, the torque steadily decreases until a constant value of about 120 meter·grams was reached. This blend was incompatible as exhibited by poor physical properties.

In like manner, the torque exerted by a 50/50 blend of the same EAA polymer and a SIPO polymer containing 0.2 percent repeating IPO units was determined. The torque exerted in preparing the blend was essentially the same as that of the control, indicating that the crosslinkages formed between the SIPO and EAS polymers did not significantly affect the general rheology of the blend. However, the tensile testing indicated that the blend had significantly improved physical properties as compared to the control indicating that sufficient linkages between the EAA and SIPO polymers were formed to compatibilize the blend.

A third evaluation was run, this time employing a 1 percent IPO SIPO polymer. This time, the blended polymers exhibited a torque of 160 meter·grams indicating that significant crosslinkages between the EAA and SIPO polymers occurred.

A fourth evaluation was run, this time employing a 50/50 blend of an EAA polymer containing 6.5 percent acrylic acid units and a 1 percent IPO SIPO polymer. After the SIPO polymer was melted and blended with the EAA, the torque exerted by the blend exhibited a constant value of about 180 meter·grams, indicating that a still greater amount of linkages were formed between the component polymers.

A fifth evaluation was run employing 25 g of the same EAA polymer as used in the fourth evaluation, 16 g of a 5 percent SIPO polymer and 9 g of a 10 percent IPO SIPO polymer. The torque exhibited by the blend reached a constant value of about 230 meter·grams.

A sixth evaluation was run employing a 50/50 blend of a 9 percent acrylic acid ethylene acrylic acid polymer and a 10 percent IPO SIPO polymer. This time the torque exerted by the blend reached a maximum as the SIPO was added, fell to a minimum value of about 300 meter·grams as the SIPO softens and then gradually rises to about 400 meter·grams as linkages between the EAA and the SIPO polymers formed.

To further vary the formation of linkages between the SIPO and the EAA polymers, a blend of a 2.5 percent IPO SIPO polymer and a 20 percent acrylic acid EAA polymer was prepared by melt-blending. This blend was studied by infrared variable temperature techniques by heating the blend from ambient temperature to about 200°C in hot orthodichlorobenzene while periodically taking infrared scans of the heated blend. The initial cool system exhibited infrared peaks corresponding to the presence of dimerized $(COOH)_2$ groups and oxazoline rings as well as a small proportion of amide ester groups. As the blend was heated, the dimerized $(COOH)_2$ and oxazoline peaks diminished while the amide ester peaks increased in intensity indicating that the carboxyl and oxazoline groups were reacting to form amide ester groups. Upon heating the sample, the amide ester peak did not significantly decrease in intensity indicating that the amide ester linkages were permanent and stable.

Experiment 2

In a Brabender mixer equipped with a torque measuring apparatus at 220°C 75 parts of high density polyethylene/maleic anhydride graft copolymer (HDPE/MA) containing 1 percent by weight maleic anhydride units were softened. To the softened HDPE/MA polymer was added 25 parts SIPO polymer containing 1 percent IPO units. Upon adding the SIPO polymer, the torque exerted by the blend increased. The torque then decreased as the SIPO was softened and blended and slightly increased again as crosslinkages between the SIPO and HPDE/MA polymers formed and then reached a constant value of about 270 meter·grams. A sample of the resulting blend was compression molded at 160°C and 689.5 bar for 3 minutes. The notch impact strength of the molded sample was measured and found to be 0.12 kg·m/2.54 cm.

The foregoing experiment was repeated, this time using 30 parts SIPO and 70 parts HPDE/MA. The torque exerted by the blend followed a pattern similar to that of the previous sample reaching a constant value of about 280 meter·grams. The notched impact strength of this blend was 0.07 kg m/2.54 cm.

The experiment was again repeated, this time using 35 parts SIPO polymer and 65 parts HDPE/MA polymer. Again a similar torque pattern is seen with the torque reaching a final constant value of about 380 meter·grams. The notched impact strength of this sample was 0.067 kg·m/2.54 cm.

Another blend containing 70 percent HDPE/MA polymer and 30 percent SIPO polymer was prepared in like manner except 0.2 percent zinc chloride was added to the blend to promote the formation of crosslinks

between the polymers. Mechanical testing of molded samples of this blend was conducted with results as reported in Table II following.

TABLE II

| Sample | HDPE/MA//SIPO[1] | PS[2] | HDPE[3] |
|---|---|---|---|
| Heat Distortion[4] (°C) Temperature (°F) | 121 (250) | 104.5 (220) | 127 (260) |
| Heat Distortion Under[5] (°C) Load (18.2 bar) (°F) | 65 (149) | 99 (210) | 53 127 |
| Tensile Strength (bar)[6] | 290 | 359 | 303 |
| Tensile Modulus (bar)[7] | 16.548 | 28.959 | 10.342 |
| Elongation (%)[8] | 70 | 2 | >150 |
| Impact Strength (kg·m/2.54 cm)[9] | 0.28—0.83 | 0.3 | 0.36 |
| Melt Flow[10] | 0.6 | 7 | 0.8 |

[1]70 percent high density polyethylene grafted with 1 percent maleic anhydride polymer:30 percent styrene/isopropenyl oxazoline copolymers containing 1 percent isopropenyl units.
[2]Polystyrene, $M_n$ = 200,000.
[3]High density polyethylene.
[4]ASTM D1525
[5]ASTM D648
[6—8]ASTM D638
[9]ASTM D256
[10]ASTM D1238

As can be seen from the data presented in Table II, excellent mechanical properties were exhibited by this blend. By comparing the properties of the blend with those of polystyrene and high density polyethylene, it is seen that the blend exhibited properties which are generally intermediate to those of the polystyrene and HDPE.

### Experiment 3

Four blends of a 75 percent styrene/24 percent acrylonitrile/1 percent IPO terpolymer (SANIPO) and a 94 percent propylene/6 percent acrylic acid copolymer (PAA) were prepared in a Brabender mixer at the proportions indicated in Table III following. Two of the blends also contained 0.6 percent zinc chloride. As a control, a blend of polystyrene and the PAA polymer was also prepared. Torque measurements of the blend were made as a measure of the compatibility of the blends.

TABLE III

| Sample No. | %[1] SANIPO | %[2] PAA | %PS[3] | %ZnCl[4] | Torque[5] (meter·grams) |
|---|---|---|---|---|---|
| III—A | 80 | 20 | — | 0 | 410 |
| III—B | 70 | 30 | — | 0 | 290 |
| III—C | 70 | 30 | — | 0.6 | 290 |
| III—D | 60 | 40 | — | 0.6 | 270 |
| III—E* | — | 30 | 70 | 0 | 150 |

* Not an example of this invention.
[1]Percent by weight Styrene/acrylonitrile/IPO (75/24/1) terpolymer.
[2]Percent by weight propylene acrylic acid (94/6) copolymer.
[3]Percent by weight polystyrene.
[4]Percent by weight zinc chloride catalyst.
[5]Measured on a Brabender apparatus.

In the control (Sample No. III—E) the polystyrene and PAA polymers resisted blending due to the mutual incompatibility thereof. The resulting blend was a stringy mixture exhibiting poor plastic properties. By contrast, each of Sample Nos. III—A through III—D exhibited good plastic properties evidencing a compatibilization of the component polymer. The increased torque measurement for Sample Nos. III—A — III—D as compared with Sample No. III—E indicated increased compatibility between the compared polymers.

Experiment 4

In a Brabender mixer at 220°C 75 parts of a SIPO (1 percent IPO) copolymer was softened. To the softened SIPO was added 25 parts of a carboxylated polyester resin, sold as Vitel® VPE6434. The blending was continued until the blend assumed a homogeneous appearance. Torque measurements made during the blending indicated that crosslinkages are formed between the component polymers during blending. The torque exerted by the blend reached a final constant value of about 170 meter·grams.

For comparison, this experiment was repeated this time substituting 75 parts polystyrene for the SIPO polymer. Torque measurements showed no formation of linkages between the polymers. The final torque reading was only 90 meter·grams.

Experiment 5

In this example, blends of a vinylidene chloride/methacrylic acid copolymer (1 percent methacrylic acid) were prepared with diverse other polymers.

35 parts polystyrene were softened on a Brabender mixer at 220°C. To the softened polymer were added 65 parts of vinylidene chloride/methacrylic acid copolymer. Torque measurements indicated the formation of no crosslinkages between the polymers. Substitution of a 1 percent IPO SIPO copolymer for the polystyrene resulted in the formation of substantial amounts of linkages between the component polymers. Similarly, substitution of 15 percent chlorinated polyethylene and 20 percent of a 1 percent IPO SIPO copolymer for the polystyrene again provided a blend in which linkages between the component polymers were formed.

The foregoing experiment was again repeated, this time employing in place of the polystyrene a coagulated methyl methacrylate ethylacrylate latex which had been coagulated to powdered form. Viscosity measurements made during blending indicated no formation of crosslinks between these polymers. However, when a methyl methacrylate/ethylacrylate/acrylic acid/IPO polymer was employed, viscosity measurements during the blending clearly indicated the formation of linkages between the polymers and the resulting blend was a compatible blend exhibiting good physical properties.

**Claims**

1. A polymer blend comprising a component having units containing a pendant cyclic iminoether group, characterized in that the blend is a thermoplastic polymer blend comprising a first reactive thermoplastic polymer containing a compatibilizing amount of repeating units containing a pendant cyclic iminoether group, and a second reactive thermoplastic polymer containing a compatibilizing amount of repeating units containing a co-reactive group which is capable of reacting with said cyclic iminoether group to form a linkage between said first and second reactive polymers, wherein said first and second reactive polymers are normally incompatible when said first and second polymers do not contain such cyclic iminoether and co-reactive groups.

2. The blend of Claim 1 wherein repeating units of said first polymer which contain a pendant cyclic iminoether group comprise to 0.01 to 10 percent by weight of said first polymer and the repeating unit of said other polymer which contains said coreactive group comprises from 0.01 to 10 percent by weight of said other polymer.

3. The blend of Claim 2 wherein said coreactive group is an electrophilic group containing an active hydrogen.

4. The blend of Claim 2 wherein said coreactive group is a carboxylic acid, amino or hydroxyl group.

5. The blend of Claim 4 wherein the cyclic iminoether group is a 2-oxazoline group.

6. The blend of Claim 5 wherein said first polymer is a polymer of styrene and said other polymer is a polymer of an olefin having from 2 to 8 carbon atoms.

7. The blend of Claim 6 wherein said other polymer is a polymer of ethylene and/or propylene.

8. The blend of Claim 7 wherein said first polymer is a copolymer of styrene and a 2-alkenyl-2-oxazoline

and said other polymer comprises a polymer of ethylene and an α,β-ethylenically unsaturated carboxylic acid.

9. The blend of Claim 8 wherein said first polymer is a copolymer of styrene and 2-isopropenyl-2-oxazoline and said other polymer is a copolymer of ethylene and acrylic acid.

10. A blend of Claim 4 wherein said first polymer is a polymer of styrene and said other polymer is a polymer of a vinyl halide.

11. The blend of Claim 10 wherein said first polymer is a polymer of styrene and a 2-alkenyl-2-oxazoline and said second polymer comprises a polymer of vinylchloride and an α,β-ethylenically unsaturated carboxylic acid.

**Patentansprüche**

1. Polymergemisch das eine Komponente mit Einheiten umfaßt, die ein cyclische Iminoether-Seitengruppe enthalten, dadurch gekennzeichnet, daß das Gemisch ein thermoplastisches Polymergemisch ist, das ein erstes reaktives thermoplastisches Polymer mit einer kompatibel machenden Menge von sich wiederholenden Einheiten umfaßt, die eine cyclische Iminoether-Seitengruppe enthalten, und ein zweites reaktives thermoplastisches Polymer mit einer kompatibel machenden Menge von sich wiederholenden Einheiten umfaßt, die eine coreaktive Gruppe enthalten, die mit der cyclischen Iminoethergruppe reagieren kann, so daß eine Bindung zwischen den ersten und zweiten reaktiven Polymeren entsteht, worin die ersten und zweiten reaktiven Polymere normalerweise nicht kompatibel sind, wenn die ersten und zweiten Polymere keine cyclischen Iminoether- und coreaktiven Gruppen enthalten.

2. Gemisch nach Anspruch 1, worin sich wiederholende Einheiten des ersten Polymers, die eine cyclische Iminoether-Seitengruppe enthalten, 0,01 bis 10 Gew.-% des ersten Polymers umfassen und die sich weiderholende Einheit des anderen Polymers, welche die coreaktive Gruppe enthält, 0,01 bis 10 Gew.-% des anderen Polymers umfaßt.

3. Gemisch nach Anspruch 2, worin die coreaktive Gruppe eine elektrophile Gruppe ist, die einen aktiven Wasserstoff enthält.

4. Gemisch nach Anspruch 2, worin die coreaktive Gruppe eine Carbonsäure-, Amino- oder Hydroxyl-Gruppe ist.

5. Gemisch nach Anspruch 4, worin die cyclische Iminoether-Gruppe eine 2-Oxazolin-Gruppe ist.

6. Gemisch nach Anspruch 5, worin das erste Polymer ein Polymer von Styrol und das andere Polymer ein Polymer eines Olefins mit 2 bis 8 Kohlenstoff-Atomen ist.

7. Gemisch nach Anspruch 6, worin das andere Polymer ein Polymer von Ethylen und/oder Propylen ist.

8. Gemisch nach Anspruch 7, worin das erste Polymer ein Copolymer von Styrol und einem 2-Alkenyl-2-oxazolin ist und das andere Polymer ein Polymer von Ethylen und einer α,β-ethylenisch ungesättigten Carbonsäure umfaßt.

9. Gemisch nach Anspruch 8, worin das erste Polymer ein Copolymer von Styrol und 2-Isopropenyl-2-oxazolin ist und das andere Polymer ein Copolymer von Ethylen und Acrylsäure ist.

10. Gemisch nach Anspruch 4, worin das erste Polymer ein Polymer von Styrol ist und das andere Polymer ein Polymer eines Vinylhalogenids ist.

11. Gemisch nach Anspruch 10, worin das erste Polymer ein Polymer von Styrol und einem 2-Alkenyl-2-oxazolin ist und das zweite Polymer von Vinylchlorid und einer α,β-ethylenisch ungesättigten Carbonsäure umfaßt.

**Revendications**

1. Alliage de polymères comprenant un composant comportant des motifs contenant un groupe iminoéther cyclique accroché, caractérisé en ce que l'alliage est un alliage de polymères thermoplastiques comprenant un premier polymère thermoplastique réactif contenant une quantité, conférant la compatibilité, de motifs répétitifs contenant un groupe iminoéther cyclique accroché, et un second polymère thermoplastique reactif contenant une quantite, conferant la compatibilité, de motifs répétitifs contenant un groupe co-réactif qui est capable de réagir avec ledit groupe iminoéther cyclique pour former une liaison entre lesdits premier et second polymères réactifs, lesdits premier et second polymères réactifs étant normalement incompatibles lorsque lesdits premier et second polymère ne contiennent pas de tels groupes iminoéther cyclique et co-réactif.

2. Alliage selon la revendication 1, dans lequel les motifs répétitifs dudit premier polymère qui contiennent un groupe iminoéther cyclique accroché constituent de 0,01 à 10% en poids dudit premier polymère, et les motifs répétitifs dudit autre polymère qui contiennent ledit groupe co-réactif constituent de 0,01 à 10% en poids dudit autre polymère.

3. Alliage selon la revendication 2, dans lequel ledit groupe co-réactif est un groupe électrophile contenant un atome d'hydrogène actif.

4. Alliage selon la revendication 2, dans lequel ledit groupe co-réactif est un groupe acide carboxylique, amino ou hydroxyle.

5. Alliage selon la revendication 4, dans lequel le groupe iminoéther cyclique est une groupe 2-oxazoline.

6. Alliage selon la revendication 5, dans lequel ledit premier polymère est un polymère du styrène et ledit autre polymère est un polymère d'oléfine comportant de 2 à 8 atomes de carbone.

7. Alliage selon la revendication 6, dans lequel ledit autre polymère est un polymère de l'éthylène et/ou du propylène.

8. Alliage selon la revendication 7, dans lequel ledit premier polymère est un copolymère du styrène et d'une 2-alcényl-2-oxazoline et ledit autre polymère comprend un polymère de l'éthylène et d'un acide carboxylique à insaturation α,β-éthylénique.

9. Alliage selon la revendication 8, dans lequel ledit premier polymère est un copolymère du styrène et de la 2-isopropényl-2-oxazoline et ledit autre polymère est un copolymère l'éthylène et de l'acide acrylique.

10. Alliage selon la revendication 4, dans lequel ledit premier polymère est un polymère du styrène et ledit autre polymère est un polymère d'un halogénure de vinyle.

11. Alliage selon la revendication 10, dans lequel ledit premier polymère est un polymère du styrène et d'une 2-alcényl-2-oxazoline et ledit second polymère comprend un polymère du chlorure de vinyle et d'un acide carboxylique à insaturation α,β-éthylénique.